# EUROPÄISCHE PATENTSCHRIFT

(11) **EP 2 785 997 B1**
(45) Veröffentlichungstag und Bekanntmachung des Hinweises auf die Patenterteilung: **28.10.2015**
(21) Anmeldenummer: 12816645.1
(22) Anmeldetag: 27.11.2012
(51) Int. Cl.: F02B 37/18, F16K 1/20

(54) **STELLKLAPPENVORRICHTUNG FÜR EINE TURBOLADEREINHEIT**
REGULATING FLAP DEVICE FOR A TURBOCHARGER UNIT
ENSEMBLE PAPILLON DES GAZ POUR UN BLOC TURBOCOMPRESSEUR

(30) Priorität: 28.11.2011 AT 17462011
(43) Veröffentlichungstag der Anmeldung: 08.10.2014
(73) Patentinhaber: Steyr Motors GmbH, 4407 Steyr (AT)
(72) Erfinder: ASCHABER, Michael, A-4421 Aschach a. d. Steyr (AT); POXHOFER, Markus, A-3361 Aschbach (AT)
(74) Vertreter: Burger, Hannes
(86) Internationale Anmeldenummer: PCT/AT2012/050185
(87) Internationale Veröffentlichungsnummer: WO 2013/078493

(56) Entgegenhaltungen:
- EP-A1- 2 199 564
- WO-A1-2006/121745
- WO-A1-2008/083769
- JP-A- 2003 254 051
- US-A1- 2009 293 654

## Beschreibung

Die Erfindung betrifft eine Stellklappenvorrichtung nach dem Oberbegriff des Anspruchs 1, sowie ein System umfassend eine derartige Stellklappenvorrichtung für Verbrennungskraftmotoren mit einer Turboladereinheit und einem der Turboladereinheit in Bezug auf die Strömungsrichtung des Abgases vorgeordneten Abgassammelrohr.

Um die Maximalleistung bzw. den Wirkungsgrad von drehzahlvariierenden bzw. leistungsvariablen Verbrennungskraftmotoren für Fahrzeuge, seien es Nutzfahrzeuge, Personenkraftfahrzeuge oder Wasserfahrzeuge, zu erhöhen, werden üblicherweise Turboladereinheiten mit zumindest zwei Turboladern eingesetzt. In einer Turboladereinheit wird mit dem aus den Motorzylindern ausgestoßenen Abgas wenigstens ein Turbinenrad angetrieben, welches dann seine Energie an einen Kompressor bzw. an wenigstens ein Verdichterrad überträgt, mit welchem die zur Verbrennung in dem Motor vorgesehene Luft komprimiert werden kann. So kann eine erhöhte Sauerstoffzufuhr in die Motorzylinder erfolgen, was den Verbrennungsprozess verbessern und somit den Wirkungsgrad bzw. die Leistung des Verbrennungskraftmotors erhöhen kann.

Die EP 2 199 564 A1 beschreibt eine Stellklappenvorrichtung für eine Turboladereinheit, welche strömungstechnisch zwischen einem Niederdruck-Turbolader und einem Hochdruck-Turbolader positioniert ist, um die Gasstrommenge zwischen diesen beiden Turboladern des zweistufigen Abgas-Turboladersystems zu regulieren bzw. zu verändern. Die Stellklappenvorrichtung umfasst dabei eine um eine Schwenkachse drehbar gelagerte Stellklappe, welche geometrisch derart optimiert ist, dass ein feinfühliges Dosierverhalten der Stellklappenvorrichtung im nahezu geschlossenen Zustand der Stellklappenvorrichtung ermöglicht ist Die Geometrie der Stellklappe und des Stellklappensitzes sind dabei speziell aufeinander abgestimmt, um ein verbessertes Steuer- bzw. Regulierverhalten in der beinahe geschlossenen Stellung der Stellklappe zu erzielen.

Die WO 2006/121745 A1 beschreibt eine zweistufige Turboladereinheit mit einem Niederdruck- und einem Hochdruck-Turbolader. Dabei ist ein Steuerventil vorgesehen, um den Abgasstrom ausgehend vom Hochdruck-Turbolader zum Niederdruck-Turbolader feinfühlig variieren bzw. regulieren zu können. Dieses Steuerventil ist dabei als sogenannte Wechselschalter-Stellklappe ausgeführt, die es ermöglicht, in einer ersten Stellposition eine erste Durchtrittsöffnung zu verschließen und in einer zweiten, dazu distanzierten Stellposition eine zweite Gasdurchtrittsöffnung zu verschließen, sodass wahlweise der Niederdruck-Turbolader oder der Hochdruck-Turbolader mit dem Abgasstrom beaufschlagbar sind. In dazwischen liegenden Stellpositionen dieser Wechselschalter-Stellklappe ist dabei sowohl der Niederdruck-Turbolader als auch der Hochdruck-Turbolader mit dem Abgasstrom der Verbrennungskraftmaschine beaufschlagbar. Diese Wechselschalter-Stellklappe soll die Performance dieser Turboladereinheit verbessern.

Die WO 2008/083769 A1 bezieht sich auf eine mehrstufige Turboladeranordnung für einen Verbrennungsmotor. Diese Turboladeranordnung umfasst eine Hochdruckstufe und eine Niederdruckstufe, welche über ein öffen- und schließbares Strömungskanalsystem mit der Hochdruckstufe in Wirkverbindung bringbar ist. Eine Regeleinheit ist zur Regelung der Wirkverbindung der Hochdruckstufe und der Niederdruckstufe vorgesehen, wobei die Regeleinheit und das Strömungskanalsystem in einem zwischen der Hochdruckstufe und der Niederdruckstufe angeordneten Motorabgaskrümmer integriert sind. Mit dieser Turboladeranordnung soll ein Regelsystem geschaffen werden, welches eine verbesserte Regelgüte sowie einen vereinfachten und kompakten Aufbau aufweist.

Die US 2009/0293654 Albeschreibt eine elektromotorisch angetriebene Stellklappenvorrichtung für einen Turbolader. Dabei ist zwischen einem Stellklappengehäuse, welches die Stellklappe drehbeweglich aufnimmt, und einem elektrischen Stellmotor zur Veränderung der Schwenkwinkelstellung der Stellklappe ein rohrförmiges Zwischenelement vorgesehen. Dieses Zwischenelement soll zum einen Ausrichtungsfehler bzw. Abweichungen in der Achsfluchtung zwischen dem Stellklappengehäuse und dem Stellmotor ausgleichen bzw. kompensieren und zum anderen eine thermische Entkoppelung zwischen dem Stellklappengehäuse und dem Stellmotor bewirken. Insbesondere wird durch die räumliche Distanzierung aufgrund des dazwischen positionierten Zwischenelements eine Wärmeübertragung zwischen der Stellklappenvorrichtung und dem Stellmotor erschwert bzw. zumindest teilweise hintangehalten.

Die JP 2003-254051 A offenbart eine Turbolader-Konstruktion mit einem Wastegate-Ventil in einem Bypass-Kanal zum Schaufelrad des Abgasturboladers. Dieses Wastegate-Ventil umfasst eine schwenkbeweglich gelagerte Stellklappe. Eine Steuervorrichtung steuert die Stellklappe derart, dass diese Stellklappe in Kaltstart-Phasen der Verbrennungskraftmaschine geöffnet ist und damit der Abgasstrom aus der Verbrennungskraftmaschine direkt in den Auspuffkanal gelangt und dort einen Abgaskatalysator vergleichsweise rascher aufheizt, um die Katalysationswirkung desselben rascher zu erreichen bzw. die Betriebstemperatur möglichst rasch zu erzielen. Dieses Bypass-Ventil hat also den Zweck der rascheren Erzielung bzw. Erreichung der Betriebstemperatur des Abgaskatalysators.

Aus der EP 1 274 928 B1 ist eine Turboladereinheit für eine Brennkraftmaschine bekannt, die zwei Turbolader verschiedener Größe aufweist. Die Turboladereinheit ist mit einer integral ausgebildeten Stellklappe versehen, mittels der der Abgasstrom derart geleitet werden kann, dass er wahlweise nur einen oder beide der Turbolader durchströmt. Auf diese Weise kann also zwischen den verschieden großen bzw. leistungsfähigen Turboladern hin- und hergeschaltet werden bzw. ist es dadurch ermöglicht, bei niedrigem Abgasdruck bzw. bei geringem Abgasvolumenstrom ausschließlich oder vorwiegend den kleineren Turbolader mit dem Abgasstrom zu beaufschlagen und mit zunehmendem Abgasdruck bzw. bei ansteigendem Abgasvolumenstrom alternativ bzw. zusätzlich den größeren Turbolader mit dem Abgas zu beaufschlagen. Die Turboladereinheit ist dabei stets baulich getrennt von einem Auspuffkrümmer ausgebildet, wobei die Stellklappe innerhalb der Turboladereinheit angeordnet und als integraler Bestandteil der Turboladereinheit ausgeführt ist.

Aufgrund der integrierten Anordnung der Stellklappe in der Turboladereinheit wird die Wartung bzw. eine Generalüberholung der Turboladereinheit komplizierter und aufwändiger. Zudem ist eine Wartung oder eine Reparatur der Stellklappenkonstruktion bzw. ein allfälliger Austausch der thermisch hoch belasteten Stellklappe umständlicher und gegebenenfalls mit einem Ausbau der gesamten Turboladereinheit verbunden. Ferner ist die Fertigung einer derartigen Turboladereinheit kostenintensiver.

Das Grundprinzip einer Turbolader-Kombination bzw. Turbolader-Umschaltung mittels Ventilsystemen ist auch aus der DE 31 42 499 A1 bekannt. Eine praktikable bauliche Umsetzung ist dieser Druckschrift nicht zu entnehmen.

Es ist daher Aufgabe der Erfindung, eine Stellklappenvorrichtung und/oder ein System mit einer Stellklappenvorrichtung zur Verfügung zu stellen, welches den Stand der Technik verbessert und wenigstens einen der zuvor genannten Nachteile nicht aufweist.

Die Aufgabe wird durch die Stellklappenvorrichtung gemäß Anspruch 1 sowie durch ein System gemäß den Ansprüchen 8 oder 10 gelöst. Vorteilhafte Ausbildungen der Erfindung sind Gegenstand der Unteransprüche.

Eine erfindungsgemäß ausgeführte Stellklappenvorrichtung für eine Turboladereinheit umfasst eine Stellklappe und ein Stellklappengehäuse, das wenigstens eine Gaseinlassöffnung und wenigstens eine Gasauslassöffnung aufweist. In der Stellklappenvorrichtung ist die Stellklappe zur Einstellung bzw. zur gesteuerten Um- oder Weiterleitung von einem durch die Stellklappenvorrichtung strömenden Gasstrom vorgesehen. Der Gasstrom wird dabei durch die Stellklappenvorrichtung gesteuert bzw. kontrolliert zu wenigstens einer der ausgebildeten Gasauslassöffnungen geführt. Der Gasstrom kann ein Abgasstrom sein. Es ist jedoch auch denkbar, dass der Gasstrom nicht ausschließlich aus Abgas besteht. Weiters kann die zumindest eine Gasauslassöffnung, welcher bzw. welchen der Gasstrom mittels der Stellklappe gezielt bzw. volumensabhängig gesteuert zuführbar ist, mit wenigstens einem in einem Turboladergehäuse der Turboladereinheit vorgesehenen Turboladereinlass fluidisch verbunden werden.

Demnach ist die Turboladereinheit separat von der Stellklappenvorrichtung ausgebildet, was den Herstellungsprozess vereinfachen und die Kosten entsprechend senken kann. Auch kann auf diese Weise ein Austausch der baulich relativ aufwendigen bzw. teuren Turboladereinheit vereinfacht werden. Zudem ist es möglich, dass aufgrund der modularen Bauweise verschiedene Turboladereinheiten, beispielsweise von unterschiedlichen Herstellern oder mit unterschiedlichen Leistungsdaten, eingebaut werden können, ohne dass zusätzliche Arbeitsschritte für den Ein- oder Umbau der Stellklappenvorrichtung anfallen. Dies kann in einer höheren Flexibilität und gleichzeitig in geringeren Kosten bei der Auswahl der zu verwendenden Bauteile resultieren.

Erfindungsgemäß weist die Stellklappenvorrichtung, insbesondere das Stellklappengehäuse der Stellklappenvorrichtung, Kanäle für einen Kühlkreislauf auf. Der Kühlkreislauf kann da bei insbesondere ein Wasserkühlkreislauf mit wenigstens einem Kühlwasserzulauf und wenigstens einem Kühlwasserablauf sein. Besonders bevorzugt ist ein Kühlkreislaufkanal in einem benachbarten Bereich, insbesondere in einer unmittelbaren Nähe, einer Drehlagerung der Stellklappe vorgesehen. Dadurch kann ein verbesserter Berührungs- bzw. Brandschutz ausgebildet werden. Vor allem im Marinebereich bzw. beim Einsatz in Wasserfahrzeugen, wo die Motorkomponenten, wie auch das Abgassystem, häufig freiliegen bzw. zugreifbar sind, kann dies wünschenswert sein. Zudem kann diese Kühlmaßnahme vorteilhaft in Bezug auf die Langlebigkeit der Stellklappe und/oder besonders zweckmäßig in Bezug auf eine möglichst langfristige Leichtgängigkeit der Drehlagerung der Stellklappe sein.

In einer bevorzugten Ausführungsform der Erfindung ist die Stellklappenvorrichtung aus zwei miteinander kommunizierenden Kammern gebildet. Dabei weist die Stellklappenvorrichtung wenigstens eine Gaseinlassöffnung und wenigstens zwei Gasauslassöffnungen auf. Zwischen der Gaseinlassöffnung und einer der Gasauslassöffnungen ist die Stellklappe vorgesehen. Die Stellklappe kann einen Gasstrom durch eine der beiden Gasauslassöffnung unterbrechen bzw. unterbinden, beispielsweise durch Verschließen einer Gasdurchtrittsöffnung, die zwischen den beiden Kammern und somit zwischen der Gaseinlassöffnung und der besagten Gasauslassöffnung ausgebildet ist. Auf dieses Weise kann ermöglicht werden, auf der Gasauslassseite der Stellklappenvorrichtung eine Turboladereinheit mit einer Mehrzahl, insbesondere zwei, Turboladern vorzusehen. Natürlich ist es auch möglich auf der Auslassseite der Stellklappenvorrichtung mehrere Turboladereinheiten mit jeweils einem Turbolader vorzusehen. Einer der Turbolader kann dann durch Öffnen oder Verschließen einer Gasdurchtrittsöffnung von dem Gasstrom abgetrennt bzw. strömungstechnisch umgangen werden. Die Gasdurchtrittsöffnung ist dabei eine Verbindungsöffnung zwischen den beiden Kammern der Stellklappenvorrichtung. So kann ein vollständiges oder partielles Zu-, Um- oder Abschalten einzelner Turbolader erreicht werden. Dies ist insbesondere dann wünschenswert, wenn ein erster, kleiner Turbolader mit relativ geringer Trägheit bereits bei geringen Motorleistungen, und entsprechend geringem Gasdruck, wirken soll, während ein zweiter, größerer Turbolader mit größerer Kapazität und größerem Trägheitsmoment erst bei höheren Gasdrücken wirken soll. Auf diese Weise kann erreicht werden, den Wirkungsgrad einer angeschlossenen Brennkraftmaschine weiter zu erhöhen bzw. die Leistungsentfaltung in einem breiteren Drehzahlband zu verbessern.

Es sei insbesondere auch der Fall erwähnt, dass die Stellklappe und die Stellklappenvorrichtung derart ausgebildet sein können, dass die Stellklappe je nach Stellung mehrere Gasdurchtrittsöffnungen gegebenenfalls auch synchron verschließen und öffnen und somit den Gasfluss durch verschiedene Gasauslassöffnungen einstellen und sogar unterbrechen kann. Auch ein Vorsehen mehrerer Stellklappen ist denkbar.

Das Stellklappengehäuse kann als ein von der Turboladereinheit und/oder dem Abgassammelrohr separates Gehäuse ausgebildet sein und wenigstens ein Befestigungsmittel, vorzugsweise einen Flansch, aufweisen, mittels dem es mit der Turboladereinheit bzw. mit den einzelnen Turboladern verbunden werden kann. Zudem kann wenigstens ein weiteres Befestigungsmittel, wie z.B. in dem Flansch vorgesehene Bohrungen und/oder Schrauben, zur Befestigung des Stellklappengehäuses an oder in einem Abgassammelrohr vorgesehen sein. Das Abgassammelrohr ist dabei ein Bestandteil eines Auspuffkrümmers, der mit den Motorzylindern verbunden ist, wobei das Abgassammelrohr einen zum Befestigungsmittel bzw. Flansch am Gehäuse der Stellklappenvorrichtung korrespondierenden Halte- bzw. Befestigungsflansch aufweist.

Weiters kann die Stellklappenvorrichtung eine Zugriffsöffnung aufweisen, durch die ein Zugriff auf die Stellklappe innerhalb des Gehäuses der Stellklappenvorrichtung auch in einem an die Turboladereinheit angeflanschten Zustand möglich ist. So können Überprüfungs- bzw. Wartungsarbeiten an der Stellklappe bzw. an der Stellklappenvorrichtung durchgeführt werden, ohne dass die Turboladereinheit oder die Stellklappenvorrichtung ausgebaut werden müssen, was den Aufwand und die Kosten für derartige Arbeiten reduzieren kann. Die Zugriffsöffnung kann mit einer Abdeckung, insbesondere einem anschraubbaren oder anflanschbaren Deckel, verschließbar sein. Dies kann Druckverluste reduzieren und einer Verschmutzung durch Fremdkörper vorbeugen. Außerdem kann diese bedarfsweise abnehmbar montierte Abdeckung einen Teilabschnitt der Begrenzungswand des Gehäuses der Stellklappenvorrichtung ausbilden, wodurch die Anzahl der insgesamt benötigten Komponenten und die resultierenden Aufbaukosten gering gehalten werden können.

Die Stellklappenvorrichtung kann in einer Weiterbildung der Erfindung auch eine Klappenaufnahme aufweisen, die eine Gasdurchtrittsöffnung umschließt bzw. umgrenzt und die so ausgebildet ist, dass die Stellklappe bei Einnahme des geschlossenen Zustandes von der Klappenaufnahme aufgenommen wird und die Gasdurchtrittsöffnung verschließt. Dies unterbricht bzw. unterbindet den Gasstrom durch die Gasdurchtrittsöffnung und folglich den Gasstrom durch die eine bzw. eine der Gasauslassöffnungen der Stellklappenvorrichtung. Durch die Klappenaufnahme, insbesondere durch einen gefrästen Klappensitz kann eine ausreichende Abdichtung bzw. Abschottung erreicht werden, was letztlich zu einem funktionalen bzw. strömungstechnischen Abkoppeln eines angeschlossenen Turboladers führen kann. So kann eine Verbesserung der Einstellung des Gasstroms erreicht werden. Die Klappenaufnahme bzw. deren Klappensitz kann dabei auch ein Abdichtungsmittel aufweisen. Dies kann eine weitere Verbesserung der Einstellung des Gasstroms ermöglichen und Druckverluste reduzieren.

Vorzugsweise ist die Stellklappe schwenkbar ausgebildet bzw. mittels einer Drehlagerung schwenkbeweglich gelagert, um so eine gesteuerte Vergrößerung und Verkleinerung des freien Querschnitts der Gasdurchtrittsöffnung zu ermöglichen. Die Verschwenkung der Stellklappe kann dabei kontinuierlich oder in vorbestimmten Abstufungen erfolgen. Ebenso ist es möglich, die Stellklappe lediglich in Bezug auf eine Offen- und eine Geschlossen-Stellung anzusteuern. Auch kann das Verschwenken mittels einer Steuereinheit gesteuert werden, die beispielsweise als eine Unterdrucksteuerung ausgebildet ist. Die Unterdrucksteuerung kann abhängig von einer dem Motorzylinder zuzuführenden Frischluft bzw. Verbrennungsluftmenge die Position der Stellklappe einstellen. Auf diese Weise kann eine Einstellung der Klappenöffnung bzw. eine Schwenkstellung der Stellklappe besser auf eine momentane Motoranforderung abgestimmt werden. Eine solche Unterdrucksteuerung kann durch den jeweils vorherrschenden Ansaugunterunterdruck für Verbrennungsluft einer Verbrennungskraftmaschine beeinflusst sein.

Die Stellklappenvorrichtung, insbesondere das Stellklappengehäuse der Stellklappenvorrichtung, kann Kanäle für einen Kühlkreislauf aufweisen. Der Kühlkreislauf kann dabei insbesondere ein Wasserkühlkreislauf mit wenigstens einem Kühlwasserzulauf und wenigstens einem Kühlwasserablauf sein. Besonders bevorzugt ist ein Kühlkreislaufkanal in einem benachbarten Bereich, insbesondere in einer unmittelbaren Nähe, einer Drehlagerung der Stellklappe vorgesehen. Dadurch kann ein verbesserter Berührungs- bzw. Brandschutz ausgebildet werden. Vor allem im Marinebereich bzw. beim Einsatz in Wasserfahrzeugen, wo die Motorkomponenten, wie auch das Abgassystem, häufig freiliegen bzw. zugreifbar sind, kann dies wünschenswert sein. Zudem kann diese Kühlmaßnahme vorteilhaft in Bezug auf die Langlebigkeit der Stellklappe und/oder besonders zweckmäßig in Bezug auf eine möglichst langfristige Leichtgängigkeit der Drehlagerung der Stellklappe sein.

In einem erfindungsgemäßen System aus einer Stellklappenvorrichtung und einer Turboladereinheit wird die Stellklappenvorrichtung an einer Position angeordnet, die sich baulich vor der Turboladereinheit, d.h. vor dem Turboladergehäuse befindet. "Vor" bedeutet dabei, dass sich die Stellklappenvorrichtung bezüglich der Turboladereinheit in Gasströmungsrichtung an einer stromaufwärtigen Seite der Turboladereinheit befindet. Das Gas durchströmt folglich zunächst die Stellklappenvorrichtung und strömt von dort in die Turboladereinheit, bzw. in einen oder mehrere Turbolader, die hinter - also in einem stromabwärtigen Bereich - der Stellklappenvorrichtung vorgesehen sind. Auf diese Weise können in einem derartigen Turboladersystem die bereits weiter oben aufgeführten Vorteile hinsichtlich der kostengünstigeren Handhabung im Herstellungsprozess bzw. im Wartungsfall der Turboladereinheit erreicht werden.

Die Turboladereinheit kann wenigstens ein Turboladergehäuse und wenigstens einen Turbolader aufweisen. Das Stellklappengehäuse ist dabei vorzugsweise unmittelbar mit dem Turboladergehäuse bedarfsweise lösbar verbunden. Insbesondere ist das Stellklappengehäuse so mit dem Turboladergehäuse verbunden, dass die Gasauslassöffnungen des Stellklappengehäuses in die Gaseinlassöffnungen des Turboladergehäuses übergehen.

Außerdem kann das Stellklappengehäuse zusätzlich oder alternativ mit einem Abgassammelrohr einer Brennkraftmaschine lösbar verbunden sein. Dabei ist die Stellklappenvorrichtung bzw. das Stellklappengehäuse mit einem stromabwärtigen Ende des Abgassammelrohrs verbunden, insbesondere lösbar verbunden, und die Gaseinlassöffnung der Stellklappenvorrichtung ist fluidisch mit einem Hohlraum des Abgassammelrohrs verbunden. Auf diese Weise kann mittels der Stellklappenvorrichtung gezielt bzw. selektiv Abgas von dem Abgassammelrohr zu wenigstens einem der beiden Gaseinlässe des Turboladergehäuses bzw. der Turboladergehäuse geleitet werden, wobei mittels der Stellklappe in der Stellklappenvorrichtung eine Einstellung des Gasstroms zu zumindest einer Gasauslassöffnung der Stellklappenvorrichtung erfolgt.

Die Stellklappenvorrichtung kann insbesondere auch innerhalb des Abgassammelrohrs angeordnet werden, ohne sich von dem Erfindungsgedanken zu entfernen. Dies bedeutet, dass die Stellklappenvorrichtung innerhalb des Abgassammelrohrs lösbar mit diesem verbunden sein kann.

In einer besonderen Ausführung der Erfindung kann die Stellklappenvorrichtung einstückig mit dem Abgassammelrohr ausgebildet sein, wobei die Merkmale und Weiterbildungen einer separaten Stellklappenvorrichtung, wie zuvor beschrieben, analog auch in dieser Ausführungsform vorgesehen sein können. Bei einer einstückigen bzw. einteiligen Ausbildung der Stellklappenvorrichtung mit dem Abgassammelrohr ist insbesondere das Stellklappengehäuse als integraler Bestandteil des Abgassammelrohrs bzw. des Auspuffkrümmers ausgebildet. Dabei ist das Abgassammelrohr an einem Ende mit dem Stellklappengehäuse einstückig verbunden, wodurch das Abgassammelrohr und das Gehäuse der Stellklappenvorrichtung einen integral ausgebildeten Bestandteil darstellen. Bei der einstückigen Verbindung geht der Hohlraum des Abgassammelrohres unmittelbar in die Gaseinlassöffnung der Stellklappenvorrichtung über. Der stromabwärtige Bereich der Gaseinlassöffnung der Stellklappenvorrichtung, in der die wenigstens eine Gasauslassöffnung vorgesehen ist, entspricht im Sinne der Erfindung einem Abschnitt der Stellklappenvorrichtung. Somit ist bei einer einstückigen bzw. integralen Ausbildung der Stellklappenvorrichtung mit dem Abgassammelrohr die Stellklappenvorrichtung zwischen dem Abgassammelrohr und der baulich eigenständig ausgebildeten Turboladereinheit angeordnet.

Die oben erwähnten Kühlkreislaufkanäle können zusätzlich auch in Teilbereichen bzw. Mantelabschnitten des Abgassammelrohrs ausgebildet sein, welche nicht zur Stellklappenvorrichtung gehören. So kann eine Kühlung insbesondere in Bezug auf die Außenseite des Abgassammelrohrs erreicht werden. Dies kann wiederum eine Verletzungs- bzw. Brandgefahr im Betrieb verringern, was insbesondere bei Marinefahrzeugen bzw. Booten besonderes zweckmäßig ist.

Unabhängig von den spezifischen Ausführungsformen der Stellklappenvorrichtung als separates Bauteil zwischen der Turboladereinheit und dem Abgassammelrohr, als eine in dem Abgassammelrohr eingebrachte Vorrichtung, oder als eine einstückig mit dem Abgassammelrohr ausgebildete Vorrichtung, sind in einer zweckmäßigen Weiterbildung der Erfindung mehr als ein Turbolader, insbesondere zwei Turbolader, vorgesehen. Die Turbolader bzw. deren Schaufelräder können dabei in demselben Turboladergehäuse ausgebildet sein oder in separaten Turboladergehäusen vorgesehen werden.

In einer Ausführungsform weist die Stellklappenvorrichtung bzw. das das Gehäuse der Stellklappenvorrichtung ausbildende Abgassammelrohr zwei Gasauslassöffnungen auf, die jeweils mit einem Gaseinlass des Turboladergehäuses bzw. der Turboladergehäuse verbunden sind. Die Turbolader können unterschiedliche Größen haben. So ist es denkbar, dass ein kleiner Turbolader mit der einen Gasauslassöffnung der Stellklappenvorrichtung fluidisch verbunden ist, während ein größerer Turbolader mit der zweiten Gasauslassöffnung der Stellklappenvorrichtung fluidisch verbunden ist. Vorteilhafterweise ist die Gasauslassöffnung, die mit dem größeren Turbolader fluidisch verbunden ist, durch die Stellklappe von dem Gasstrom abtrennbar. Der große Turbolader kann auf diese Weise kontinuierlich oder auch abrupt zu- oder abgeschaltet werden. So kann der Wirkungsgrad eines Motors durch Auswahl des eingesetzten Turboladers schon bei geringen Motorleistungen erhöht werden.

Die Turbolader, sowie die Gehäuse, in denen die Turbolader vorgesehen sind, werden in ihrer Gesamtheit als Turboladereinheit bezeichnet. Dabei ist es auch möglich, dass die Turboladereinheit aus mehreren Gehäusen besteht, die einen oder mehrere Turbolader enthalten können.

Es ist auch denkbar, dass ein erstes, kleines Turboladergehäuse, das einen ersten Turbolader enthält, unmittelbar mit der Stellklappenvorrichtung bzw. mit dem Abgassammelrohr bedarfsweise lösbar verbunden ist, während ein zweites, größeres Turboladergehäuse, das einen zweiten, größeren Turbolader enthält, lediglich mit dem ersten Turboladergehäuse mechanisch verbunden ist. Dazu weist das kleine Turboladergehäuse zwei Gaseinlassöffnungen auf, nämlich einen ersten Turbolader- bzw. Gaseinlass, der zu dem kleinen Turbolader führt und einen zweiten Turbolader- bzw. Gaseinlass, der ähnlich einem Bypass an dem kleinen Turbolader vorbei direkt zu dem großen Turboladergehäuse, vorzugsweise direkt zu dem großen Turbolader führt. Das zweite Turboladergehäuse ist dabei durch wenigstens einen in dem kleinen Turboladergehäuse ausgebildeten Kanal und den zweiten Turboladereinlass in mittelbarem fluidischen Kontakt mit der Stellklappenvorrichtung bzw. dem Abgassammelrohr. Zweckmäßig kann es also sein, am ersten Turboladergehäuse für den kleineren Turbolader beide Turboladereinlässe, also sowohl für den kleinen Turbolader, als auch für den größeren Turbolader vorzusehen. Somit kann ein standardmäßig verfügbarer, größerer Turbolader ohne Modifikationen an das spezifisch ausgeführte Turboladergehäuse des kleineren Turboladers angekoppelt bzw. angeflanscht werden. Der erforderliche Fertigungsaufwand und die Aufbaukosten können somit möglichst gering gehalten werden.

Die oben beschriebenen Ausführungsformen können in verschiedenen Fahrzeugen wie Nutzfahrzeugen, Personenkraftfahrzeuge oder insbesondere auch Wasserfahrzeugen eingesetzt werden. Die Anwendung ist aber auch in Verbindung mit anderen Verbrennungskraftmaschinen denkbar, ohne sich von dem Erfindungsgedanken zu entfernen.

In den Zeichnungen ist der Erfindungsgegenstand schematisch dargestellt und wird anhand der Figuren nachfolgend beschrieben, wobei gleiche oder gleich wirkende Elemente zumeist mit denselben Bezugszeichen versehen sind.

Dabei zeigt:
- Fig. 1: einen Längsschnitt durch ein Turboladersystem mit einer Stellklappenvorrichtung gemäß einer ersten Ausführungsform der Erfindung;
- Fig. 2: eine perspektivische Ansicht der in ein Abgassammelrohr integrierten Stellklappenvorrichtung aus Figur 1;
- Fig. 3: eine teilweise geschnittene Seitenansicht eines Turboladersystems mit einer Stellklappenvorrichtung gemäß einer zweiten Ausführungsform der Erfindung;
- Fig. 4: eine perspektivische Ansicht einer separaten Stellklappenvorrichtung aus Figur 3; a) in einer Schrägsicht auf eine stromabwärtige Seite mit teilweise geöffneter Stellklappe; b) in einer Schrägsicht auf eine stromaufwärtige Seite bei teilweise geöffneter Stellklappe; c) in einer Schrägansicht auf eine stromabwärtige Seite mit geschlossener Stellklappe.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

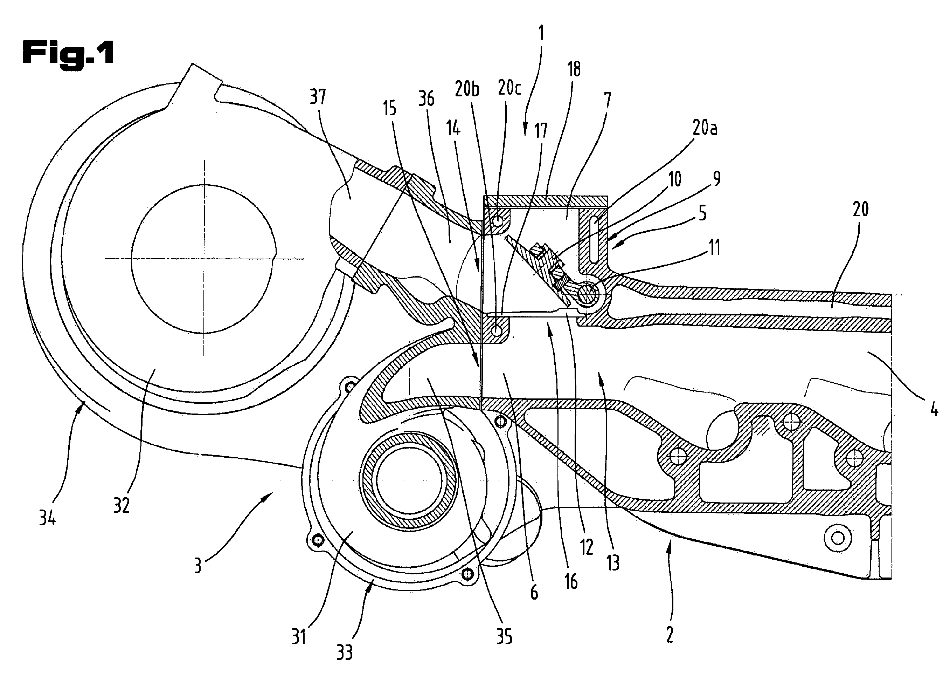

Das in Fig. 1 gezeigte System stellt ein Turboladersystem gemäß einer ersten Ausführungsform der Erfindung dar und weist eine Stellklappenvorrichtung 1, einen Auspuffkrümmer 2 einer Verbrennungskraftmaschine, insbesondere eines Motors eines Wasserfahrzeugs, und eine Turboladereinheit 3 auf. Es ist zu beachten, dass in Figur 1 nur ein Bereich des Auspuffkrümmers 2 dargestellt ist, der im Folgenden als Abgassammelrohr 4 bezeichnet wird.

Die Stellklappenvorrichtung 1 weist ein Stellklappengehäuse 9 auf, das mit dem Abgassammelrohr 4, insbesondere mit einer Begrenzungswand des Abgassammelrohrs 4, einstückig verbunden ist In dem Stellklappengehäuse 9 sind zwei fluidisch miteinander kommunizierende Kammern 6, 7 ausgebildet, wobei das Abgassammelrohr 4 in die untere Kammer 6 mündet. Das Stellklappengehäuse 9 weist zudem einen vom Abgassammelrohr 4 vorstehenden Abschnitt 5 auf, der die obere Kammer 7 enthält. Der vorstehende Abschnitt 5 steht in eine Richtung quer zu einer nicht dargestellten Längsachse des Abgassammelrohrs 4 von diesem vor. Dabei ist zwischen den beiden Kammern 6, 7 eine gesteuert verschließ- und freigebbare Gasdurchtrittsöffnung 16 ausgebildet.

In dem Stellklappengehäuse 9 ist eine Gaseinlassöffnung 13 vorgesehen, die unmittelbar in einen Hohlraum des Abgassammelrohrs 4 übergeht Ferner weist das Stellklappengehäuse 9 eine erste Gasauslassöffnung 15 und eine zweite Gasauslassöffnung 14 auf. Die erste und die zweite Gasauslassöffnung 14, 15 sind seitlich versetzt zueinander ausgebildet, insbesondere sind diese unmittelbar nebeneinander in einer gemeinsamen Stirn- bzw. Begrenzungswand des Stellklappengehäuses 9 ausgebildet. Dabei werden die Gasauslassöffnungen 14, 15 von einem Stellklappensteg 17 baulich getrennt. Die erste Gasauslassöffnung 15 ist durch die untere Kammer 6 mit der Gaseinlassöffnung 13 und mit dem Abgassammelrohr 4 verbunden, wobei eine in der Figur 1 nicht gezeigte Mittellinie der Gasauslassöffnung 15 im Wesentlichen koaxial zu der Längsachse des Abgassammelrohrs 4 ausgerichtet ist.

Die zweite Gasauslassöffnung 14 ist in dem seitlich vorkragenden bzw. abstehenden Abschnitt 5 des Stellklappengehäuses 9 vorgesehen und durch die obere Kammer 7 und die Gasdurchtrittsöffnung 16 fluidisch mit der Gaseinlassöffnung 13 und somit mit dem Abgassammelrohr 4 verbunden. Die Gasdurchtrittsöffnung 16 bildet eine Strömungsverbindung ausgehend von der unteren Kammer 6 in die obere Kammer 7 aus. Dabei steht eine die Gasdurchtrittsöffnung 16 enthaltende Ebene im Wesentlichen senkrecht zu einer die erste und/oder zweite Gasauslassöffnung 14, 15 enthaltende Ebene. Die Gasdurchtrittsöffnung 16 ist von einem Klappensitz bzw. einer Klappenaufnahme 12 umfasst bzw. umgrenzt, die somit die Form der Gasdurchtrittsöffnung 16 bestimmt. Die Klappenaufnahme 12 kann insbesondere derart ausgebildet sein, dass die Gasdurchtrittsöffnung 16 einen ovalen Querschnitt aufweist.

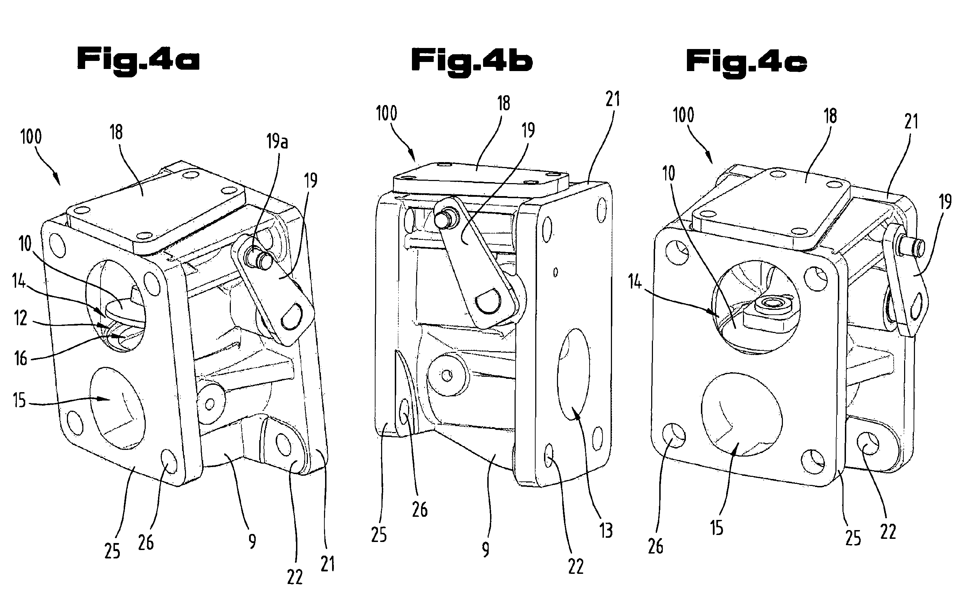

In der oberen Kammer 7 ist eine Stellklappe 10 vorgesehen, die drehbar gelagert ist, insbesondere mittels einer Drehlagerung innerhalb der Kammer 7 schwenkbeweglich gehaltert ist. Eine Stellklappenwelle 11, um deren Mittelachse ein Verschwenken der Stellklappe 10 erfolgt, ist in einem dem Abgassammelrohr 4 zugewandten Bereich bzw. in einem von der zweiten Gasauslassöffnung 14 abgewandten Bereich der oberen Kammer 7 ausgebildet. Die obere Kammer 7 ist derart ausgebildet, dass in vollständig geöffnetem Zustand der Stellklappe 10 der Gasstrom von der Stellklappe 10 nicht behindert wird. Hierzu bildet die Stellklappe 10 in der in Fig. 1 gezeigten maximalen Offenstellung einen Teilabschnitt der Begrenzungswand für den Gasstrom in Richtung zur zweiten Gasauslassöffnung 14 aus. Die Stellklappe 10 ist des Weiteren derart angeordnet, dass sie in einem geschlossenen Zustand die Gasdurchtrittsöffnung 16 verschließen kann, wie dies beispielsweise in der nachfolgend diskutierten Figur 4c ersichtlich ist.

In einem der Stellklappenwelle 11 nahen Wandbereich des vorstehenden Abschnitts 5 ist ein Kühlkanal 20A ausgebildet, der im Querschnitt ovalförmig ausgeführt sein kann und dessen nicht dargestellte Längsachse im Wesentlichen quer zu der Längsachse des Abgassammelrohrs 4 verläuft. Des Weiteren sind in einem der zweiten Gasauslassöffnung 14 nahen Wandbereich des vorstehenden Abschnitts 5, insbesondere in dem die Gasauslassöffnungen 14, 15 trennenden Stellklappensteg 17, weitere im Querschnitt beispielsweise kreisförmige Kühlkanäle 20B, 20C ausgebildet. Dadurch wird die Langlebigkeit bzw. Robustheit des Klappensitzes bzw. der Klappenaufnahme 12, welche im Betrieb hohen thermischen Belastungen ausgesetzt ist, deutlich verbessert.

Wie des Weiteren aus Fig. 1 zu erkennen ist, weist der vorstehende Abschnitt 5 der Stellklappenvorrichtung 1 an seinem der Klappenaufnahme 12 entfernten Ende eine Zugriffsöffnung auf. Die Zugriffsöffnung ist derart ausgebildet, dass ein Zugriff in einer senkrecht zu der Klappenaufnahme 12 verlaufenden Richtung in die Stellklappenvorrichtung 1, insbesondere auf die Stellklappe 10 bzw. auf die Klappenaufnahme 12 möglich ist. Die Zugriffsöffnung ist mit einer plattenartigen Abdeckung 18 verschlossen.

Das Abgassammelrohr 4 ist im Wesentlichen als ein einstückiges Gehäuse mit einem Hohlraum, durch den der Gasstrom fließt, ausgebildet. Dabei ist der Hohlraum des Abgassammelrohrs 4 unmittelbar mit der Gaseinlassöffnung 13 der Stellklappenvorrichtung 1 fluidisch verbunden. Zudem ist die Wandung des Abgassammelrohrs 4 mit Kühlkanälen 20 versehen, die insbesondere um den Hohlraum angeordnet sind. Das Abgassammelrohr 4 ist mit seinem stromabwärtigen Ende mit dem Stellklappengehäuse 9 einstückig verbunden. Das heißt, dass das Stellklappengehäuse 9 bei dieser Ausführungsform eine integrale Einheit mit dem Abgassammelrohr 4 des Auspuffkrümmers 2 ausbildet.

Die Turboladereinheit 3 besteht hier aus zwei Turboladergehäusen 33, 34. An die Stellklappenvorrichtung 1 ist ein erstes Turboladergehäuse 33 unmittelbar angeschlossen. Das zweite Turboladergehäuse 34 ist an das erste Turboladergehäuse 33 angeschlossen, sodass das zweite Turboladergehäuse 34 vom ersten Turboladergehäuse 33 lastabtragend gehaltert wird.

In dem ersten Turboladergehäuse 33 ist ein erster, kleiner Turbolader 31 vorgesehen. Es versteht sich, dass die Beschreibung hinsichtlich der Größe eines Turboladers beispielsweise als "klein" sowohl die geometrischen Dimensionen wie auch die Kapazität des jeweiligen Turboladers umfassen kann.

Zudem weist das erste Turboladergehäuse 33 einen ersten Turboladereinlass 35 und einen zweiten Turboladereinlass 36 auf. Der erste Turboladereinlass 35 ist derart in dem ersten Turboladergehäuse 33 ausgebildet, dass er fluidisch mit der ersten Gasauslassöffnung 15 der Stellklappenvorrichtung 1 verbunden ist, wenn das erste Turboladergehäuse 33 an der Stellklappenvorrichtung 1 befestigt ist. Der zweite Turboladereinlass 36 des ersten Turboladergehäuses 33 ist fluidisch mit der zweiten Gasauslassöffnung 14 der Stellklappenvorrichtung 1 verbunden.

Der erste Turboladereinlass 35 des Turboladergehäuses 33 führt spiralförmig zu dem kleinen Turbolader 31. Entlang der Strömungsrichtung des in den kleinen Turbolader 31 geleiteten Gasstroms ist ein nicht gezeigtes Turbinenschaufelrad ausgebildet, das von dem Gasstrom angetrieben wird. Das Turbinenschaufelrad ist, vorzugsweise mechanisch, mit einem nicht gezeigten Kompressionsmittel, beispielsweise einem Verdichterschaufelrad, zur Kompression der Verbrennungsluft verbunden. Der Gasstrom verläuft weiter durch eine nicht gezeigte Verbindung zwischen einer Gasausstoßöffnung des kleinen Turboladers 31 und dem Turboladereinlass 36 des zweiten, größeren Turboladers 32.

Das zweite Turboladergehäuse 34 ist derart mit dem ersten Turboladergehäuse 33 verbunden, dass der zweite Turboladereinlass 36 des ersten Turboladergehäuses 33 mit einem Turboladereinlass 37 des zweiten Turboladergehäuses 34 verbunden ist. In dem zweiten Turboladergehäuse 34 ist ein zweiter, größerer Turbolader 32 bzw. ein größeres Schaufelrad angeordnet. Das zweite Turboladergehäuse 34 ist mit einer in den Figuren nicht dargestellten Abführleitung verbunden, über die der Gasstrom aus dem zweiten Turboladergehäuse 34 nach Durchströmen eines Turbinenschaufelabschnitts oder ähnlichem abgeführt wird.

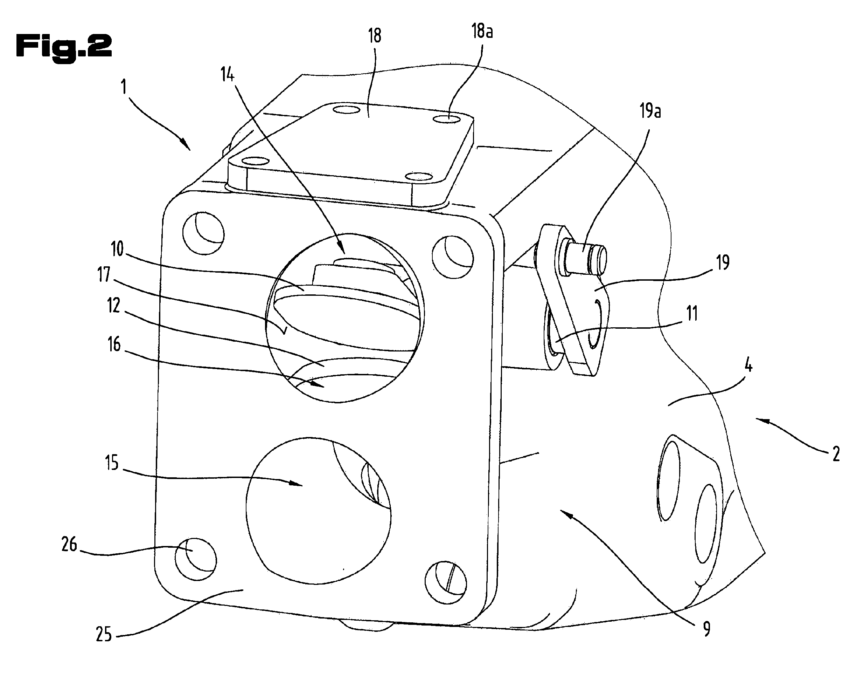

Fig. 2 zeigt in perspektivischer Sicht auf eine stromabwärtige Seite einer in das Abgassammelrohr 2 integrierten Stellklappenvorrichtung 1, welche Stellklappenvorrichtung 1 zur Anbindung an eine nachgeschalteten Komponente, insbesondere an eine Turboladereinheit 3 - Figur 1 - ausgebildet ist. Als Befestigungsmittel 25 wird hier eine Befestigungsplatte mit entsprechenden Befestigungsöffnungen 26 dargestellt. Die Ankopplung der Stellklappenvorrichtung 1 an die Turboladereinheit 3 kann hier mittels den Befestigungsöffnungen 26 in der Befestigungsplatte erfolgen. Insbesondere kann diese Kopplung durch Anflanschen, Verschrauben, Aufklemmen oder auf andere übliche Weise erfolgen.

Die Abdeckung 18, welche die Bearbeitungs- bzw. Zugriffsöffnung des seitlich vorstehenden Abschnitts 5 des Stellklappengehäuses 9 abschließt, kann mittels einer Mehrzahl von Befestigungsöffnungen 18A, hier vier Befestigungsöffnungen, mit dem Stellklappengehäuse 9 verbunden werden. Die Befestigungsöffnungen 18A sind dabei in einem randnahen Bereich der Abdeckung 18 verteilt und sind deckungsgleich mit entsprechenden nicht gezeigten Öffnungen in dem Stellklappengehäuse 9, insbesondere im vorstehenden Abschnitt 5, angeordnet.

Wie zudem in Figur 2 zu erkennen ist, ragt die Stellklappenwelle 11 durch das Stellklappengehäuse 9 hindurch. In einem Bereich außerhalb des Stellklappengehäuses 9, insbesondere an einer Verlängerung der Stellklappenwelle 11 ist ein Stellhebel 19 angeordnet. Der Stellhebel 19 ist mit der Stellklappenwelle 11 drehfest verbunden und via die Stellklappenwelle 11 gegenüber dem Stellklappengehäuse 9 drehbar gelagert. An einem der Stellklappenwelle 11 abgewandten Ende des Stellhebels 19 ist ein Vorsprung 19a vorgesehen. Der Vorsprung 19a ist dazu ausgebildet, um mit einem nicht gezeigten Verstellungsgestänge bzw. mit einem Kolben oder einem anderen geeigneten Verstellmittel gekoppelt zu werden, um so eine Rotationsbewegung des Stellhebels 19 zu bewirken. Auf diese Weise wird eine Rotation des Stellhebels 19 über die Stellklappenwelle 11 an die Stellklappe 10 übertragen, wodurch der Öffnungsquerschnitt der Gasdurchtrittsöffnung 16 entsprechend verändert wird. Die Steuerung der Position der Stellklappe 12 erfolgt vorzugsweise über eine hier nicht dargestellte Steuereinheit, die insbesondere eine Unterdrucksteuerung aufweisen kann.

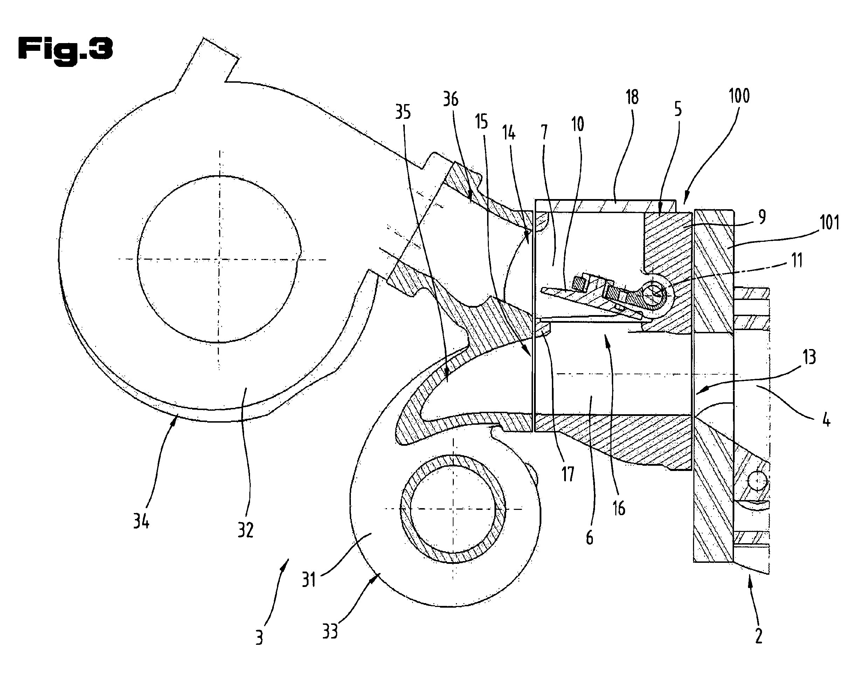

Fig. 3 zeigt eine zweite Ausführungsform der Erfindung, die sich im Wesentlichen insofern von der zuvor beschriebenen Ausführungsform unterscheidet, dass die Stellklappenvorrichtung als eine separate Stellklappenvorrichtung 100 ausgebildet ist und somit nicht einstückig mit dem Abgassammelrohr 4 ausgebildet ist. Die Stellklappenvorrichtung 100 ist mit dem Abgassammelrohr 4 und der Turboladereinheit 3, insbesondere dem ersten Turboladergehäuse 33, lösbar verbunden. Die separate Ausbildung der Stellklappenvorrichtung 100 wird aus den Fig. 4 a - c deutlich, in denen eine baulich eigenständig ausgeführte Stellklappenvorrichtung 100 dargestellt ist. Die Stellklappenvorrichtung 100 weist im Übrigen dieselben Merkmale auf, wie die zuvor beschriebene Stellklappenvorrichtung 1, so dass die in den Figuren verwendeten Bezugszeichen den zuvor eingeführten Bezugszeichen entsprechen.

Wie aus Fig. 3 zu erkennen ist, ist die Stellklappenvorrichtung 100 zwischen dem Abgassammelrohr 4 und der Turboladereinheit 3 angeordnet. Dies bedeutet, dass die Stellklappenvorrichtung 100 bezogen auf die Turboladereinheit 3 in Gasströmungsrichtung mit einer stromaufwärtigen Seite der Turboladereinheit 3 lösbar verbunden ist. Ferner bedeutet dies, dass die Stellklappenvorrichtung 100 bezogen auf das Abgassammelrohr 4 in Gasströmungsrichtung mit einer stromabwärtigen Seite des Abgassammelrohrs 4 lösbar verbunden ist. Die Stellklappenvorrichtung 100 weist eine Gaseinlassöffnung 13 auf, die fluidisch mit dem Abgassammelrohr 4 des Auspuffkrümmers 2 verbunden ist. So ist auch in dieser Ausführungsform gewährleistet, dass ein Gasstrom von einer nicht gezeigten Brennkraftmaschine durch einen Auspuffkrümmer 2 und schließlich einen Endabschnitt des Abgassammelrohrs 4 in die Stellklappenvorrichtung 100 gelangt und mittels einer Stellklappe 10 in nur eine Gasauslassöffnung 15 oder in beide Gasauslassöffnungen 14, 15 leitbar ist.

Zwischen der modularen, baulich eigenständig ausgeführten Stellklappenvorrichtung 100 und dem Abgassammelrohr 4 kann auch ein Adapterelement 101 vorgesehen sein, beispielsweise ein Übergangblock ausgebildet sein, um einen ausreichend gasdichten bzw. anschlusskompatiblen Übergang zwischen dem Abgassammelrohr 4 und dem Stellklappengehäuse 9 zu erleichtern.

Fig. 4 a zeigt eine perspektivische Ansicht auf eine stromabwärtige Seite, also auf eine der Turboladereinheit 3 - Fig. 3 - zugewandte Seite einer Stellklappenvorrichtung 100. An diesem stromvorwärtsseitigen Ende der Stellklappenvorrichtung 100 ist analog zu dem Befestigungsmittel 21 auf der stromrückwärtigen Seite ein Befestigungsmittel 25 bestehend aus einer Befestigungsplatte und einer Mehrzahl, hier vier, Befestigungsöffnungen 26 vorgesehen. Die Befestigungsöffnungen 26 sind entlang eines Randbereichs in der Befestigungsplatte ausgebildet. Mittels des stromvorwärtsseitigen Befestigungsmittels 25 ist eine Verbindung der Stellklappenvorrichtung 100 mit der Turboladereinheit 3 möglich, während das stromrückwärtige Befestigungsmittel 21 eine Befestigung mit dem Auspuffkrümmer 2 bzw. mit dessen Abgassammelrohr 4 ermöglicht. In dieser Teilfigur ist die Stellklappe 10 nur teilweise geöffnet und nur ansatzweise zu erkennen.

Fig. 4 b zeigt eine perspektivische Ansicht auf eine stromrückwärtige Seite der Stellklappenvorrichtung 100 dieser Ausführungsform. Dabei ist insbesondere die Gaseinlassöffnung 13 zu erkennen, durch die der Gasstrom in die Stellklappenvorrichtung 100 eintritt und die mit dem hier nicht dargestellten Abgassammelrohr 4 - Fig. 3 - verbunden ist.

Fig. 4 c zeigt eine perspektivische Ansicht auf eine stromvorwärtsseitige Seite der Stellklappenvorrichtung 100 analog zu der Fig. 4 a. Dabei zeigt Fig. 4 c einen Zustand der Stellklappenvorrichtung 100, bei der sich die Stellklappe 10 in einer geschlossenen Position befindet und die Gasdurchtrittsöffnung 16 - Fig. 4a - vollständig verschließt. Wie ein Vergleich der Fig. 4 a und 4 c erbringt, kann im Falle einer geschlossenen Stellklappe 10 ein Gasstrom lediglich durch die erste Gasauslassöffnung 15 strömen, insbesondere zuerst bzw. ausschließlich dem kleineren Turbolader 31 - Fig. 3 - zugeführt werden.

Im Folgenden wird kurz die Funktionsweise der Stellklappenvorrichtung 1, 100 beschrieben. Auch wenn die Beschreibung der Funktionsweise unter Zuhilfenahme der Bezugszeichen erfolgt, ist die Erfindung nicht auf die in den Figuren dargestellten Ausführungsformen beschränkt.

In einem unteren Drehzahl- bzw. Lastbereich des Motors befindet sich die Stellklappe 10 in einer geschlossenen Stellung. Dies bedeutet, dass kein Gasstrom durch die zweite Gasauslassöffnung 14 aus der Stellklappenvorrichtung 1 strömen kann. Der aus den Motorzylindern strömende Gasstrom strömt durch das Abgassammelrohr 4, insbesondere durch den Hohlraum des Abgassammelrohrs 2, und in weiterer Folge über die Gaseintrittsöffnung 13 in die Stellklappenvorrichtung 1, 100 ein. Da die Stellklappe 10 geschlossen ist, strömt der komplette Gasstrom durch die erste Gasauslassöffnung 15 in das erste Turboladergehäuse 33 und zuerst zum kleineren Turbolader 31. Von dort strömt das Gas durch einen Verbindungskanal in den zweiten Turboladereinlass 36 des ersten Turboladergehäuses 33 und von dort in das zweite, größere Turboladergehäuse 34, d.h. zum größeren Turbolader 32. Nach Durchströmen des ersten Turboladers 31 hat der Gasstrom in der bevorzugten Ausführungsform einen Großteil seiner Energie an den ersten, kleineren Turbolader 31 abgegeben, so dass ein Antreiben des zweiten Turboladers 32 bei geschlossener Stellklappe 10 nicht bzw. nur marginal erfolgt. Der zweite Turbolader 32 wird folglich in dieser Klappenstellung nicht bzw. nur geringfügig angetrieben. Der Gasstrom tritt dann durch eine in den Figuren nicht gezeigte Abführleitung aus dem zweiten Turboladergehäuse 34 aus.

In einem hohen Drehzahl- bzw. Lastbereich des Motors bewirkt die Steuereinheit über den Stellhebel 19 ein Aufschwenken der Stellklappe 10 und somit entweder ein abruptes Öffnen, bevorzugt jedoch ein allmähliches Öffnen der Gasdurchtrittsöffnung 16, so dass das in dem Abgassammelrohr 4 strömende Gas über die Gasdurchtrittsöffnung 16 und damit auch über die zweite Gasauslassöffnung 14 aus der Stellklappenvorrichtung 1 ausströmen und primär den vergleichsweise größeren Turbolader 32 antreiben kann. Es sei an dieser Stelle erwähnt, dass der Strömungswiderstand des kleinen Turboladers 31 derart gewählt bzw. derart hoch ist, dass bei einer geöffneten Stellklappe 10 das Gas bevorzugt durch die zweite Gasauslassöffnung 14 strömt und somit den ersten Turbolader 31 eher umgeht. Natürlich ist es möglich, den Strömungswiderstand des ersten Turboladers 31 derart zu wählen, dass ein geringer Gasstrom auch durch den ersten Turbolader 31 strömt und dadurch auch ein zusätzlicher Kompressionseffekt durch den ersten Turbolader 31 erzielt wird.

Das über die zweite Gasauslassöffnung 14 strömende Gas strömt in einen Kanal- bzw. Teilabschnitt des ersten Turboladergehäuses 33 und von dort in das zweite Turboladergehäuse 34 und damit zu dem zweiten Turbolader 32, wie dies am besten Fig. 3 zu entnehmen ist. Die Steuerung der Stellklappe 10 erfolgt so, dass das dem zweiten Turbolader 32 zugeführte Gas ausreichend Energie besitzt, um die Massenträgheit des zweiten Turboladers 32 zu überwinden, so dass durch diesen adäquate Leistung zur Kompression von Luft bereitgestellt wird. Das Gas verlässt dann das zweite Turboladergehäuse 34 durch eine nicht dargestellte Abführleitung bzw. über eine Auspuffanlage. Somit wird im unteren Last- bzw. Drehzahlbereich des Motors primär der kleinere Turbolader 31 mit dem Abgasdruck beaufschlagt, während im höheren Last- bzw. Drehzahlbereichen des Motors durch Öffnen der Stellklappe 10 zusätzlich bzw. zunehmend auch der größere Turbolader 32 mit dem Abgasdruck des Abgasstroms beaufschlagt wird. Die Stellklappenvorrichtung 1, 100 in Verbindung mit der Turboladereinheit 3 bzw. das dementsprechende System reduziert somit das sogenannte "Turboloch" und verbessert das Ansprechverhalten sowie den Wirkungsgrad der damit ausgestatteten Verbrennungskraftmaschine.

Die Ausführungsbeispiele zeigen mögliche Ausführungsvarianten der Stellklappenvorrichtung 1, 100 bzw. des die Stellklappenvorrichtung 1, 100 umfassenden Systems, wobei an dieser Stelle bemerkt sei, dass die Erfindung nicht auf die speziell dargestellten Ausführungsvarianten eingeschränkt ist.

Der Ordnung halber sei abschließend daraufhingewiesen, dass zum besseren Verständnis des Aufbaus einzelne Bestandteile teilweise unmaßstäblich und/oder vergrößert und/oder verkleinert dargestellt wurden.

**Bezugszeichenaufstellung**

| | | | |
|---|---|---|---|
| 1 | Stellklappenvorrichtung (integriert) | 36 | Turboladereinlass |
| 2 | Auspuffkrümmer | 37 | Turboladereinlass |
| 3 | Turboladereinheit | | |
| 4 | Abgassammelrohr | 100 | Stellklappenvorrichtung (separat) |
| 5 | Abschnitt | 101 | Adapterelement |
| | | | |
| 6 | untere Kammer | | |
| 7 | obere Kammer | | |
| 8 | | | |
| 9 | Stellklappengehäuse | | |
| 10 | Stellklappe | | |
| | | | |
| 11 | Stellklappenachse | | |
| 12 | Klappenaufnahme | | |
| 13 | Gaseinlassöffnung | | |
| 14 | zweite Gasauslassöffnung | | |
| 15 | erste Gasauslassöffnung | | |
| | | | |
| 16 | Gasdurchtrittsöffnung | | |
| 17 | Stellklappensteg | | |
| 18 | Abdeckung | | |
| 18a | Befestigungsöffnung | | |
| 19 | Stellhebel | | |
| 19a | Vorsprung | | |
| 20, 20A, 20B, 20C | Kühlkanäle | | |
| | | | |
| 21 | Befestigungsmittel | | |
| 22 | Befestigungsöffnung | | |
| 23 | | | |
| 24 | | | |
| 25 | Befestigungsmittel | | |
| | | | |
| 26 | Befestigungsöffnung | | |
| 27 | | | |
| 28 | | | |
| 29 | | | |
| 30 | | | |
| | | | |
| 31 | kleiner Turbolader | | |
| 32 | großer Turbolader | | |
| 33 | Turboladergehäuse | | |
| 34 | Turboladergehäuse | | |
| 35 | Turboladereinlass | | |

## Patentansprüche

1. Stellklappenvorrichtung für eine Turboladereinheit (3), mit einer Stellklappe (10), einem Stellklappengehäuse (9), das wenigstens eine Gaseinlassöffnung (13) und wenigstens eine Gasauslassöffnung (14, 15) aufweist, wobei die Stellklappe (10) zur Einstellung eines durch die Stellklappenvorrichtung (1, 100) strömenden Gasstroms, insbesondere eines Abgasstroms, zu wenigstens einer der Gasauslassöffnungen (14, 15) vorgesehen ist und die wenigstens eine Gasauslassöffnung (14, 15) mit wenigstens einem in einem Turboladergehäuse (33) der Turboladereinheit (3) vorgesehenen Turboladereinlass (35, 36) fluidisch verbindbar ist, **dadurch gekennzeichnet, dass** die Stellklappenvorrichtung (1, 100) Kanäle (20A, 20B, 20C) für einen Kühlkreislauf, insbesondere einen Wasserkühlkreislauf, aufweist, wobei sich wenigstens ein Kanal (20, 20A) des Kühlkreislaufes in einem zu einer Stellklappenwelle (11) benachbarten Bereich der Stellklappenvorrichtung (1, 100), insbesondere des Stellklappengehäuses (9), befindet.

2. Stellklappenvorrichtung gemäß Anspruch 1, **dadurch gekennzeichnet, dass** die Stellklappenvorrichtung (1, 100) wenigstens zwei Gasauslassöffnungen (14, 15) und eine mit der Stellklappe (10) verschließbare Gasdurchtrittsöffnung (16) aufweist, wobei die Gasdurchtrittsöffnung (16) zwischen der Gaseinlassöffnung (13) und einer der Gasauslassöffnungen (14, 15) ausgebildet ist.

3. Stellklappenvorrichtung gemäß einem der vorhergehenden Ansprüche, **dadurch gekennzeichnet, dass** das Stellklappengehäuse (9) wenigstens ein Befestigungsmittel (21, 22, 25,26) aufweist und die Stellklappenvorrichtung (1, 100) mittels des Befestigungsmittels (21, 22, 25, 26) an einem Turboladergehäuse (33, 34) und/oder einem Abgassammelrohr (4) befestigbar ist.

4. Stellklappenvorrichtung gemäß einem der vorhergehenden Ansprüche, **dadurch gekennzeichnet, dass** die Stellklappenvorrichtung (1, 100) eine Bearbeitungs- oder Zugriffsöffnung aufweist, die mit einer Abdeckung (18) verschließbar ist.

5. Stellklappenvorrichtung gemäß einem der vorhergehenden Ansprüche 2 - 4, **dadurch gekennzeichnet, dass** in der Stellklappenvorrichtung (1, 100) eine Klappenaufnahme (12) vorgesehen ist, die die Gasdurchtrittsöffnung (16) umgrenzt und die Stellklappe (10) in ihrem geschlossenem Zustand aufnimmt und dabei einen Gasstrom durch die Gasdurchtrittsöffnung (16) unterbindet.

6. Stellklappenvorrichtung gemäß einem der vorhergehenden Ansprüche 2 - 5, **dadurch gekennzeichnet, dass** die Stellklappe (10) zur Vergrößerung oder Verkleinerung der Gasdurchtrittsöffnung (16) in der Stellklappenvorrichtung (1, 100) mittels einer Drehlagerung schwenkbar ausgebildet ist.

7. Stellklappenvorrichtung gemäß Anspruch 6, **dadurch gekennzeichnet, dass** das Verschwenken der Stellklappe (10) mittels einer Steuereinheit, insbesondere basierend auf einer Unterdrucksteuerung, steuerbar ist.

8. System aus einer Stellklappenvorrichtung (1, 100) nach einem der vorhergehenden Ansprüche und einer Turboladereinheit (3), **dadurch gekennzeichnet, dass** die Stellklappenvorrichtung (1, 100) bezüglich der Turboladereinheit (3) in Gasströmungsrichtung an einer den Gasstrom zuführenden Seite der baulich eigenständig ausgeführten Turboladereinheit (3) vorgesehen ist.

9. System nach Anspruch 8, **dadurch gekennzeichnet, dass** die Turboladereinheit (3) ein Turboladergehäuse (33, 34) aufweist und das Stellklappengehäuse (9) mit dem Turboladergehäuse (33, 34) bedarfsweise lösbar verbunden ist.

10. System aus einer Stellklappenvorrichtung nach einem der Ansprüche 1 - 7 und einem Abgassammelrohr (4), wobei die Stellklappenvorrichtung (1, 100) an dem Abgassammelrohr (4) und bezüglich des Abgassammelrohrs (4) in Gasströmungsrichtung stromabwärts ausgebildet ist.

11. System nach Anspruch 10, **dadurch gekennzeichnet, dass** das Stellklappengehäuse (9) der Stellklappenvorrichtung (1) als einstückiger, integraler Bestandteil des Abgassammelrohrs (4) ausgebildet ist.

12. System nach einem der Ansprüche 8 - 11, **dadurch gekennzeichnet, dass** die Stellklappenvorrichtung (1) ausgangsseitig mit zwei Turboladern (31, 32) fluidisch verbunden ist.

13. System gemäß Anspruch 12, **dadurch gekennzeichnet, dass** die zwei Turbolader (31, 32) unterschiedliche Größen, insbesondere hinsichtlich deren Dimension und Kapazität, aufweisen.

14. Fahrzeug, insbesondere Wasserfahrzeug, mit einer Stellklappenvorrichtung (1, 100) gemäß einem der Ansprüche 1 bis 7 oder mit einem System gemäß einem der Ansprüche 8 bis 13.

## Claims

1. A regulating flap device for a turbocharger unit (3), with a regulating flap (10), a regulating flap housing (9), which comprises at least one gas inlet opening (13) and at least one gas outlet opening (14, 15), wherein the regulating flap (10) is provided for adjusting a gas stream flowing through the regulating flap device (1, 100), in particular an exhaust gas stream, to at least one of the gas outlet openings (14, 15) and the at least one gas outlet opening (14, 15) can be fluidically connected to at least one turbocharger inlet (35, 36) provided in a turbocharger housing (33) of the turbocharger unit (3), **characterized in that** the regulating flap device (1, 100) comprises ducts (20A, 20B, 20C) for a cooling circuit, in particular a water cooling circuit, wherein at least one duct (20, 20A) of the cooling circuit is located in a region of the regulating flap device (1, 100), in particular of the regulating flap housing (9) that is adjacent to a regulating flap shaft (11).

2. The regulating flap device according to claim 1, **characterized in that** the regulating flap device (1, 100) comprises at least two gas outlet openings (14, 15) and a gas passage opening (16) that can be closed off with the regulating flap (10), wherein the gas passage opening (16) is formed between the gas inlet opening (13) and one of the gas outlet openings (14, 15).

3. The regulating flap device according to any one of the preceding claims, **characterized in that** the regulating flap housing (9) comprises at least one fastening means (21, 22, 25, 26) and the regulating flap device (1, 100) can be fastened to a turbocharger housing (33, 34) and/or an exhaust gas manifold (4) by means of the fastening means (21, 22, 25, 26).

4. The regulating flap device according to any one of the preceding claims, **characterized in that** the regulating flap device (1, 100) has a working or access opening that can be closed off with a cover (18).

5. The regulating flap device according to any one of the preceding claims 2 to 4, **characterized in that** in the regulating flap device (1, 100) a flap mounting (12) is provided, which bounds the gas passage opening (16) and receives the regulating flap (10) in its closed state and thereby prevents a gas stream through the gas passage opening (16).

6. The regulating flap device according to any one of the preceding claim 2 to 5, **characterized in that** the regulating flap (10) is designed pivotable by means of a pivot bearing for enlarging or reducing the gas passage opening (16) in the regulating flap device (1, 100).

7. The regulating flap device according to claim 6, **characterized in that** the pivoting of the regulating flap (10) is controllable by means of a control unit, in particular based on a vacuum control.

8. A system of a regulating flap device (1, 100) according to any one of the preceding claims and a turbocharger unit (3), **characterized in that** the regulating flap device (1, 100) with respect to the turbocharger unit (3) is provided in gas flow direction on a gas stream feeding side of the turbocharger unit (3) that is structurally embodied independently.

9. The system according to claim 8, **characterized in that** the turbocharger unit (3) comprises a turbocharger housing (33, 34) and the regulating flap housing (9) is detachably connected to the turbocharger housing (33, 34) as required.

10. The system of a regulating flap device according to any one of the claims 1 to 7 and an exhaust manifold (4), wherein the regulating flap device (1, 100) is formed on the exhaust manifold (4) and with respect to the exhaust gas manifold (4) downstream in gas flow direction.

11. The system according to claim 10, **characterized in that** the regulating flap housing (9) of the regulating flap device (1) is formed as a unitary, integral part of the exhaust manifold (4).

12. The system according to any one of the claims 8 to 11, **characterized in that** the regulating flap device (1) on the output side is fluidically connected to two turbochargers (31, 32).

13. The system according to claim 12, **characterized in that** the two turbochargers (31, 32) have different sizes, in particular with respect to their dimension and capacity.

14. A vehicle, in particular marine vehicle, with a regulating flap device (1, 100) according to any one of the claims 1 to 7 or with a system according to any one of the claims 8 to 13.

## Revendications

1. Ensemble de papillon des gaz pour une unité de turbocompresseur (3), comportant un papillon des gaz (10), un boîtier papillon (9), qui comporte au moins une ouverture d'admission des gaz (13) et au moins une ouverture de sortie des gaz (14, 15), ledit papillon des gaz (10) étant prévu pour le réglage d'un flux de gaz circulant à travers l'ensemble de papillon des gaz (1, 100), en particulier un flux de gaz d'échappement, vers au moins l'une des ouvertures de sortie des gaz (14, 15), et ladite au moins une ouverture de sortie des gaz (14, 15) peut être mise en liaison fluidique avec au moins une entrée de turbocompresseur (35, 36) prévue dans un carter (33) de l'unité de turbocompresseur (3), **caractérisé en ce que** l'ensemble de papillon des gaz (1, 100) comporte des canaux (20A, 20B, 20C) pour un circuit de refroidissement, en particulier un circuit de refroidissement à eau, au moins un canal (20, 20A) du circuit de refroidissement étant situé dans une zone, adjacente à un arbre (11) du papillon des gaz, de l'ensemble de papillon des gaz (1, 100), en particulier du boîtier papillon (9).

2. Ensemble de papillon des gaz selon la revendication 1, **caractérisé en ce que** l'ensemble de papillon des gaz (1, 100) comporte au moins deux ouvertures de sortie des gaz (14, 15) et une ouverture de passage des gaz (16) apte à être fermée par le papillon des gaz (10), l'ouverture de passage des gaz (16) étant réalisée entre l'ouverture d'admission des gaz (13) et une des ouvertures de sortie des gaz (14, 15).

3. Ensemble de papillon des gaz selon l'une quelconque des revendications précédentes, **caractérisé en ce que** le boîtier papillon (9) comporte au moins un moyen de fixation (21, 22, 25, 26), et l'ensemble de papillon des gaz (1, 100) peut être fixé à l'aide du moyen de fixation (21, 22, 25, 26) sur un carter de turbocompresseur (33, 34) et/ou un tube collecteur de gaz d'échappement (4).

4. Ensemble de papillon des gaz selon l'une quelconque des revendications précédentes, **caractérisé en ce que** l'ensemble de papillon des gaz (1, 100) comporte une ouverture de traitement ou ouverture d'accès qui peut être fermée par un couvercle (18).

5. Ensemble de papillon des gaz selon l'une quelconque des revendications précédentes 2 à 4, **caractérisé en ce que** dans l'ensemble de papillon des gaz (1, 100) est prévu un logement de papillon (12) qui entoure l'ouverture de passage des gaz (16) et reçoit le papillon des gaz (10) dans sa position fermée et, dans ce cas, empêche un flux de gaz à travers l'ouverture de passage des gaz (16).

6. Ensemble de papillon des gaz selon l'une quelconque des revendications précédentes 2 à 5, **caractérisé en ce que** le papillon des gaz (10) pour agrandir ou réduire l'ouverture de passage des gaz (16) dans l'ensemble de papillon des gaz (1, 100) est réalisé de manière pivotante au moyen d'un palier de pivotement.

7. Ensemble de papillon des gaz selon la revendication 6, **caractérisé en ce que** le pivotement du papillon des gaz (10) peut être commandé par une unité de commande, basée en particulier sur une commande par dépression.

8. Système constitué d'un ensemble de papillon des gaz (1, 100) selon l'une des revendications précédentes et d'une unité de turbocompresseur (3), **caractérisé en ce que** l'ensemble de papillon des gaz (1, 100) est prévu par rapport à l'unité de turbocompresseur (3) dans le sens de circulation des gaz sur un côté, guidant le flux de gaz, de l'unité de turbocompresseur (3) réalisée de manière indépendante sur le plan de sa construction.

9. Système selon la revendication 8, **caractérisé en ce que** l'unité de turbocompresseur (3) comporte un carter (33, 34) et le boîtier papillon (9) est relié de manière amovible, si nécessaire, au carter (33, 34) de l'unité de turbocompresseur.

10. Système constitué d'un ensemble de papillon des gaz selon l'une des revendications 1 à 7 et d'un tube collecteur de gaz d'échappement (4), l'ensemble de papillon des gaz (1, 100) étant réalisé sur le tube collecteur de gaz d'échappement (4) et en aval par rapport au tube collecteur de gaz d'échappement (4) dans le sens de circulation des gaz.

11. Système selon la revendication 10, **caractérisé en ce que** le boîtier papillon (9) de l'ensemble de papillon des gaz (1) est réalisé sous la forme d'une pièce intégrante, d'un seul tenant, du tube collecteur de gaz d'échappement (4).

12. Système selon l'une quelconque des revendications 8 à 11, **caractérisé en ce que** l'ensemble de papillon des gaz (1) est reliée, du côté sortie, de manière fluidique à deux turbocompresseurs (31, 32).

13. Système selon la revendication 12, **caractérisé en ce que** les deux turbocompresseurs (31, 32) ont des grandeurs différentes, en particulier en ce qui concerne leurs dimensions et leur capacité.

14. Véhicule, en particulier bateau, comportant un ensemble de papillon des gaz (1, 100) selon l'une des revendications 1 à 7 ou comportant un système selon l'une des revendications 8 à 13.
